# EUROPÄISCHE PATENTSCHRIFT

(11) **EP 2 707 255 B1**
(45) Veröffentlichungstag und Bekanntmachung des Hinweises auf die Patenterteilung: **18.05.2016**
(21) Anmeldenummer: 12711364.5
(22) Anmeldetag: 13.03.2012
(51) Int. Cl.: B60R 21/017, G01D 3/08, G01R 31/28

(54) **VERFAHREN UND VORRICHTUNG ZUR ÜBERPRÜFUNG EINES SENSORSIGNALS UND ZUR ANSTEUERUNG EINES INSASSENSCHUTZMITTELS EINES FAHRZEUGS**
METHOD AND DEVICE FOR CHECKING A SENSOR SIGNAL AND FOR ACTUATING A VEHICLE OCCUPANT PROTECTION MEANS OF A VEHICLE
PROCÉDÉ ET DISPOSITIF PERMETTANT DE CONTRÔLER UN SIGNAL DE DÉTECTION ET D'ACTIVER D'UN MOYEN DE PROTECTION DES PASSAGERS D'UN VÉHICULE

(30) Priorität: 10.05.2011 DE 102011075545
(43) Veröffentlichungstag der Anmeldung: 19.03.2014
(73) Patentinhaber: Robert Bosch GmbH, 70442 Stuttgart (DE)
(72) Erfinder: LOTTHOLZ, Stefan, 72764 Reutlingen (DE); NITSCHKE, Werner, 71679 Asperg (DE); SCHWEIZER, Martin, 71665 Kleinglattbach (DE); BERNDT, Steffen, 71735 Eberdingen-Hochdorf (DE)
(86) Internationale Anmeldenummer: PCT/EP2012/054314
(87) Internationale Veröffentlichungsnummer: WO 2012/152473

(56) Entgegenhaltungen:
- EP-A2- 0 720 004
- WO-A2-2004/065163
- DE-A1- 10 062 427
- DE-A1-102005 033 918
- DE-C2- 4 302 399
- US-A- 5 040 118

## Beschreibung

### Stand der Technik

Die vorliegende Erfindung bezieht sich auf ein Verfahren zur Überprüfung eines zur Ansteuerung eines Insassenschutzmittels eines Fahrzeugs geeigneten Sensorsignals, auf ein Verfahren zur Ansteuerung eines Insassenschutzmittels eines Fahrzeugs, auf eine entsprechende Vorrichtung sowie auf ein entsprechendes Computerprogrammprodukt.

Die DE 43 02 399 C2 beschreibt ein Verfahren zur Überprüfung einer elektronischen Einrichtung, die mindestens zwei beschleunigungsempfindliche Sensoranordnungen umfasst. Dabei werden Ausgangssignale der zwei Sensoranordnungen innerhalb eines Zeitfensters integriert, wenn die Ausgangssignale einen Mindestbeschleunigungswert überschreiten.

Die WO 2004/065163 A2 offenbart ein Rückhaltesystem für Fahrzeuginsassen mit verteilten Sensoren sowie eine Verfahren zur Plausibilitätsprüfungen, um zu überprüfen, ob eine Auslöseentscheidung für die Rückhaltesysteme von einem bestimmten Sensor das Resultat eines Ereignisses ist, das eine Auslösung von Rückhaltesystemen notwendig macht. Diese Plausibilitätsprüfung umfasst das Prüfen der Zustände der anderen Sensoren in dem System bevor eine Auslöseentscheidung ausgeführt wird.

Aus der DE 10 2005 0 33918 A1 ist ein Verfahren zum Auslösen einer Sicherheitseinrichtung für ein Fahrzeug bekannt, wobei das maßgebliche Sensorsignal zunächst mit einem ersten Schwellenwert verglichen wird, wobei dieser Schwellenwert eine sogenannte Rauschbandschwelle darstellt. Darauf folgend werden die Signalsignale, die über den Schwellenwert hinausgehen integriert, d.h. aufaddiert, und mit einem zweiten Schwellenwert verglichen. Überschreitet das integrierte Signal den zweiten Schwellenwert, so wird ein Freigabesignal erzeugt. Dieses Freigabesignal bewirkt, dass ein Zündpfad für Zündmittel der Sicherheitseinrichtung entsperrt werden.

Aus der US 50 4081 ist eine Vorrichtungen und ein Verfahren zum Auslösen von Insassenrückhaltesystemen in einem Personenfahrzeug bekannt, wobei dieses Vorrichtung bzw. dieses Verfahren eine Mehrzahl von Experten-Schaltkreisen aufweist, die unabhängig voneinander Auslöseentscheidungen treffen.

### Offenbarung der Erfindung

Vor diesem Hintergrund wird mit der vorliegenden Erfindung ein Verfahren zur Überprüfung eines zur Ansteuerung eines Insassenschutzmittels eines Fahrzeugs geeigneten Sensorsignals, ein Verfahren zur Ansteuerung eines Insassenschutzmittels eines Fahrzeugs, weiterhin eine Vorrichtung, die zumindest eines dieser Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass bisherige Verfahren zur Plausibilitätsprüfung eines Sensorsignals gewisse Fehler eines Sensors nicht erkennen. Die Erkennungsgenauigkeit kann verbessert werden, in dem ein Sensorsignal nicht nur einmal mit einem Referenzsignal oder jeweils einmal mit mehreren Referenzsignalen sonder innerhalb eines Zeitzyklus mehrfach mit einem oder mehreren Referenzsignalen verglichen wird. Auf diese Weise kann ein fehlerhaftes Sensorsignal zuverlässig erkannt werden.

Die vorliegende Erfindung schafft ein Verfahren zur Überprüfung eines zur Ansteuerung eines Insassenschutzmittels eines Fahrzeugs geeigneten Sensorsignals, das die folgenden Schritte umfasst:
Durchführen eines Vergleichs zwischen dem Sensorsignal und mindestens einem Referenzsignal mehrmals innerhalb eines vorbestimmten Zeitintervalls, um eine Mehrzahl von Vergleichsergebnissen zu erhalten; und

Bewerten des Sensorsignals basierend auf der Mehrzahl von Vergleichsergebnissen, um einen Fehler des Sensorsignals zu erkennen.

Bei dem Insassenschutzmittel kann es sich um einen Airbag handeln, der bei einer Kollision des Fahrzeugs aktiviert werden kann, um einen Insassen des Fahrzeugs vor Verletzungen zu schützen. Um die Kollision zu erkennen können Sensoren in dem Fahrzeug angeordnet sein. Bei den Sensoren kann es sich beispielsweise um Beschleunigungssensoren, Schallsensoren oder Abstandssensoren handeln. Das Sensorsignal und das Referenzsignal werden durch unterschiedliche, im Fahrzeug angeordnete Sensoren bereitgellt. Das Sensorsignal kann fortlaufend analysiert werden, um eine Kollision des Fahrzeugs zu erkennen. Beispielsweise kann das Sensorsignal dazu mit einem oder mehreren Schwellwerten verglichen werden. Ergibt eine entsprechende Analyse des Sensorsignals, das eine Kollision des Fahrzeugs vorliegt oder unmittelbar bevorsteht, so kann das Insassenschutzmittel, sofern das Sensorsignal als fehlerfrei bewertet wird, basierend auf dem Sensorsignal angesteuert, also beispielsweise aktiviert werden. Das Referenzsignal kann ebenfalls geeignet sein, um die Kollision zu erkennen. Bei einer fehlerfreien Funktionsweise eines das Sensorsignal bereitstellenden Sensors und eines das Referenzsignal bereitstellenden Sensors können das Sensorsignal und das Referenzsignal einen gleichen oder ähnlichen zeitlichen Verlauf aufweisen. Beispielsweise können das Sensorsignal und das Referenzsignal zeitlich zueinander verschoben sein oder eine unterschiedliche Signalstärke aufweisen. Vor dem Vergleich können das Sensorsignal und das Referenzsignal normiert und zusätzlich oder alternativ zur zeitlichen Übereinstimmung zeitlich verzögert werden. Durch den Vergleich des Sensorsignals mit dem Referenzsignal kann eine Abweichung zwischen einem Wert des Sensorsignals und einem Wert des Referenzsignals bestimmt werden. Liegt die Abweichung innerhalb eines vorbestimmten Bereichs, so kann ein solches Vergleichsergebnis ein Hinweis darauf sein, dass das Sensorsignal zumindest bezüglich des Vergleichszeitpunkts fehlerfrei ist. Liegt die Abweichung außerhalb des vorbestimmten Bereichs, so kann ein solches Vergleichsergebnis ein Hinweis darauf sein, dass das Sensorsignal zumindest bezüglich des Vergleichszeitpunkts fehlerhaft ist. Indem innerhalb des vorbestimmten Zeitintervalls die Mehrzahl von Vergleichen durchgeführt werden, ergeben sich eine Mehrzahl von Hinweisen darauf, ob das Sensorsignal fehlerfrei oder fehlerhaft ist und damit ob der das Sensorsignal bereitstellende Sensor fehlerfrei oder fehlerhaft ist.

Gemäß einem Ausführungsbeispiel kann im Schritt des Durchführens der Vergleich zyklisch innerhalb des vorbestimmten Zeitintervalls durchgeführt werden. Zyklisch kann bedeuten, dass zwischen zwei aufeinanderfolgenden Vergleichen jeweils gleiche Zeitspannen liegen. Durch die zyklische Durführung werden fortlaufend Vergleichsergebnisse generiert, die ausgewertet werden können.

Der Vergleich kann abwechselnd mit einem ersten Referenzsignal und mindestens einem zweiten Referenzsignal durchgeführt werden. Wird das Sensorsignal mit mehreren, beispielsweise mit drei Referenzsignalen verglichen, so kann das Sensorsignal zuerst mit dem ersten Referenzsignal, dann mit dem zweiten Referenzsignal, dann mit einem weiteren Referenzsignal und anschließend von vorne beginnend wieder mit dem ersten Referenzsignal verglichen werden. Dabei kann ein zeitlicher Abstand zwischen Vergleichen mit dem ersten und dem zweiten Referenzsignal gleich oder unterschiedlich zu einem zeitlichen Abstand zwischen Vergleichen mit dem zweiten und dem weiteren Referenzsignal sein.

Gemäß einer Ausführungsform kann das Verfahren einen Schritt des Prüfens umfassen, ob ein Wert des Sensorsignals innerhalb eines vorbestimmten Wertebereichs liegt. Der Schritt des Durchführens kann ausgeführt werden, wenn der Wert des Sensorsignals innerhalb des vorbestimmten Wertebereichs liegt. Beispielsweise kann der Wert des Sensorsignals innerhalb des vorbestimmten Wertebereichs liegen, wenn das Sensorsignal einen vorbestimmten Schwellwert überschreitet. Dabei kann es sich um eine Startschwelle für einen Algorithmus zum Ansteuern des Insassenschutzmittels handeln. Auf diese Weise ist es nicht erforderlich, die Schritte zum Überprüfen des Sensorsignals fortlaufend durchzuführen. Stattdessen wird das Sensorsignal nur dann überprüft, wenn beispielsweise ein Ereignis erkannt oder vorhergesagt wird, aufgrund dessen eine Auslösung des Insassenschutzmittels erforderlich erscheint.

Gemäß einer Ausführungsform kann das Sensorsignal als fehlerhaft bewertet werden, wenn eine vorbestimmte Anzahl der Mehrzahl von Vergleichsergebnissen eine Mindestabweichung zwischen dem einem Sensorsignal und dem mindestens einem Referenzsignal anzeigen. Auf diese Weise hängt die Bewertung des Sensorsignals nicht nur von einer Entscheidung ab, sondern wird über eine Vielzahl von Entscheidungen abgesichert. Beispielsweise kann das Sensorsignal als fehlerfrei bewertet werden, wenn die Mehrheit oder ein bestimmter Anteil der Vergleichsergebnisse darauf hindeuten, dass das Sensorsignal fehlerfrei ist. Andersherum kann das Sensorsignal als fehlerhaft bewertet werden, wenn die Mehrheit oder ein bestimmter Anteil der Vergleichsergebnisse darauf hindeuten, dass das Sensorsignal fehlerhaft ist.

Dabei können das Sensorsignal und das mindestens eine Referenzsignal Signale von Sensoren repräsentieren, die an unterschiedlichen Positionen im Fahrzeug angeordnet sind. Die Mindestabweichung kann abhängig von den Positionen der Sensoren sein. Ein Wert der Mindestabweichung kann fest vorgegeben sein. Alternativ kann eine Kollision hinsichtlich einer Kollisionsart oder Kollisionsschwere klassifziert werden, und abhängig von der Klassifikation kann eine geeignete Mindestabweichung ausgewählt werden. Wird das Sensorsignal mit unterschiedlichen Referenzsignalen verglichen, so kann für jedes der Referenzsignale eine eigene Mindestabweichung definiert sein.

Auch können das Sensorsignal und das mindestens eine Referenzsignal Signale von Sensoren repräsentieren, die im Fahrzeug angeordnet sind, und wobei die Mindestabweichung abhängig von Messtoleranzen der Sensoren ist. Auf diese Weise kann verhindert werden, dass die Bewertung des Sensorsignals aufgrund von Messtoleranzen zu einem falschen Ergebnis führt. Umso geringer die Messtoleranzen sind, umso geringer kann die Mindestabweichung gewählt werden.

Die vorliegende Erfindung schafft ferner ein Verfahren zur Ansteuerung eines Insassenschutzmittels eines Fahrzeugs, das die folgenden Schritte umfasst:
Empfangen eines Sensorsignals über eine Schnittstelle zu einem Sensor;
Empfangen mindestens eines Referenzsignals über eine Schnittstelle zu mindestens einem Referenzsensor;
Überprüfen des Sensorsignals mittels eines Verfahrens gemäß einer Ausführungsform der Erfindung; und
Ansteuern des Insassenschutzmittels basierend auf dem Sensorsignal, wenn beim Überprüfen des Sensorsignals kein Fehler erkannt wird.

Somit kann der erfindungsgemäße Ansatz vorteilhaft im Zusammenhang mit bekannten Algorithmen zur Ansteuerung von Insassenschutzmitteln eingesetzt werden.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann als Steuergerät ausgeführt sein. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:
- Fig. 1: ein Blockschaltbild eines Ausführungsbeispiels der vorliegenden Erfindung;
- Fig. 2: ein Ablaufdiagramm eines Ausführungsbeispiels der vorliegenden Erfindung; und
- Fig. 3: Signalverläufe, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

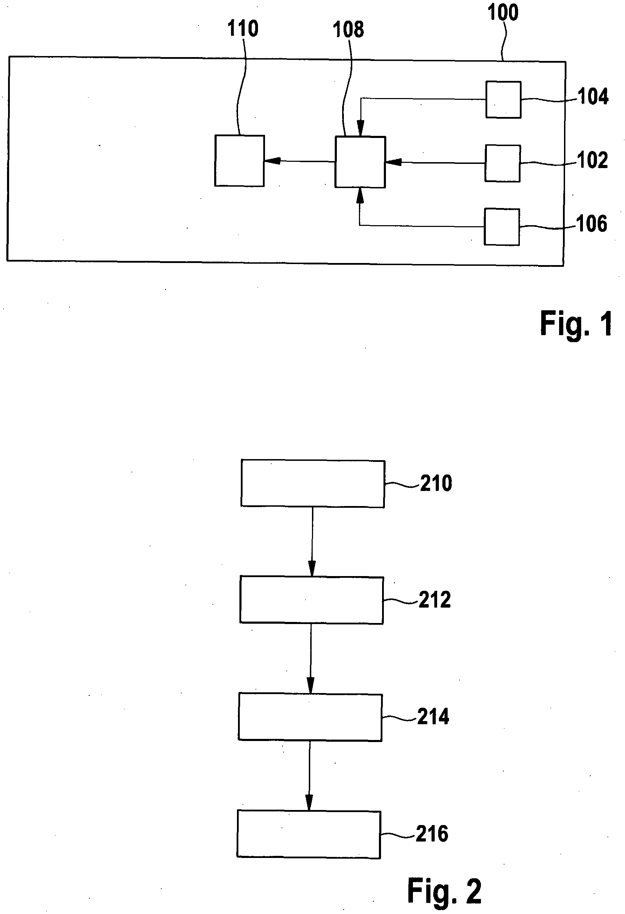

Fig. 1 zeigt eine schematische Darstellung eines Fahrzeugs 100 mit einer Vorrichtung gemäß einem Ausführungsbeispiel der vorliegenden Erfindung. In dem Fahrzeug 100 sind ein Sensor 102, zwei Referenzsensoren 104, 106 und eine Vorrichtung 108 zur Ansteuerung eines Insassenschutzmittels 110 angeordnet. Der Sensor 102 ist ausgebildet, um ein Sensorsignals an die Vorrichtung 108 bereitzustellen. Entsprechend dazu sind die Referenzsensoren 104,106 ausgebildet, um jeweils ein Referenzsensorsignal an die Vorrichtung 108 bereitzustellen. Dazu sind die Sensoren 102, 104, 106 über geeignete Schnittstellen mit der Vorrichtung 108 verbunden. Die Sensoren 102, 104, 106 sind jeweils ausgebildet, um eine Kollision des Fahrzeugs 100 mit einem Objekt zu erfassen. Ebenso könne die Sensoren 102, 104, 106 ausgebildet sein, um einen anderen für einen Insassen des Fahrzeugs gefährlichen Zustand des Fahrzeugs, wie beispielsweise einen Überschlag, zu erkennen. Die Vorrichtung 108 ist ausgebildet, um basierend auf zumindest einem der Signale der Sensoren 102, 104, 106 die Kollision oder einen entsprechend anderen gefährlichen Zustand des Fahrzeugs zu erkennen und ansprechen darauf das Insassenschutzmittel 110 zu aktivieren. Bei dem Insassenschutzmittel 110 kann es sich beispielsweise um einen Airbag des Fahrzeugs 100 handeln. Entsprechend dazu kann es sich bei der Vorrichtung 108 um ein Airbagsteuergerät handeln.

Gemäß diesem Ausführungsbeispiel ist die Vorrichtung 108 ausgebildet, um basierend auf dem Signal des Sensors 102 eine Kollision des Fahrzeugs 100 zu erkennen. Ansprechend auf ein Erkennen der Kollision ist die Vorrichtung 108 ausgebildet, um einen Signalverlauf des Signals des Sensors 102 oder einzelne Werte des Signals des Sensors 102 auf ihre Korrektheit zu überprüfen. Dazu ist die Vorrichtung 108 ausgebildet, um das Signal des Sensors 102 mit den Signalen der Referenzsensoren 104, 106 zu vergleichen. Entsprechende Vergleiche werden innerhalb einer vorbestimmten Zeitspanne nach dem Erkennen der Kollision durchgeführt. Dabei wird das Signal des Sensors 102 fortlaufend und mehrmals mit den Signalen der Referenzsensoren 104, 106 verglichen. Die Vergleiche können gemäß einem vorbestimmten Abfolgemuster, beispielsweise zyklisch, durchgeführt werden. Die Vorrichtung 108 ist ausgebildet, um das Insassenschutzmittel 110 erst dann zu aktivieren, wenn die Vergleiche ergeben, dass das Signal des Sensors 102 plausibel ist. Ferner ist die Vorrichtung 108 ausgebildet, um das lnsassenschutzmittel 110 nicht zu aktivieren, wenn die Vergleiche ergeben, dass das Signal des Sensors 102 nicht plausibel ist.

Die Sensoren 102, 104, 106 können an unterschiedlichen Positionen in dem Fahrzeug 100 angeordnet sein. Die Sensoren 102, 104, 106 können auf demselben oder auf unterschiedlichen Sensorprinzipien basieren. Die Sensoren 102, 104, 106 sind beispielhaft gezeigt. Es können auch weitere Referenzsensoren eingesetzt werden, deren Signale von der Vorrichtung 108 empfangen und zur Überprüfung des Sensorsignals des Sensors 102 eingesetzt werden.

Gemäß einem Ausführungsbeispiel ist zur sicheren Auslösung von Airbagsteuergeräten 110 in einem Automobil 100 die Auslösung eines Airbagsteuergeräts 110 stets an einen Hauptsensor 102 gebunden, der das bestimmende Signal erzeugt und zusätzlich an einen Plausibilitätssensor 104, 106 gebunden, der freigegeben werden muss. Im Allgemeinen wird die Funktion eines Sensors 102 im System sichergestellt, indem die Amplitude der abgegebenen Werte mit fest eingestellten Schwellen verglichen wird. Dazu kann z.B. beim Einschalten eine Offsetregelung in einem Korridor um die Nulllage herum durchgeführt werden oder die Signalamplitude kann länger als eine Sekunde am Messbereichsanschlag gehalten werden.

Zur sicheren Erkennung von Fehlern des Sensors 102 wird eine Fehlerdetektion durch eine Plausibilitätsprüfung durchgeführt. Zur Fehlererkennung wird die Plausibilitätsprüfung von dem Messwert eines Sensors, also beispielsweise dem Sensor 104 oder dem Sensor 106 auf den Messwert von zwei oder mehreren Sensoren, also beispielsweise den Sensoren 104, 106 und optional weiteren nicht in Fig. 1 gezeigten Sensoren erweitert. Die von dem Sensor 102 abgegebenen Signale werden gemäß diesem Ausführungsbeispiel zyklisch mit den Signalen der im System vorhandenen Redundanzsensoren 104, 106 verglichen.

Insbesondere wird ein Ausgangswert des Sensors 102 mit dem eines im System befindlichen Redundanzsensors 104, 106 verglichen, wenn der Sensor 102, bzw. das von dem Sensor 102 ausgegebene Signal, einen bestimmten Wert erreicht. Bei dem bestimmten Wert kann es sich z.B. um ein Algostartschwelle handeln. Ergibt dieser Vergleich innerhalb eines definierten Zeitzyklus mehrfach starke Abweichungen, so wird der Sensor 102 als fehlerhaft eingestuft, um entsprechende Maßnahmen im System einzuleiten. Die entsprechenden Maßnahmen können z.B. eine Abschaltung des Sensors 102 oder von Komponenten zur Ansteuerung des Airbags 110 umfassen. Die zulässigen Abweichungen ergeben sich gemäß diesem Ausführungsbeispiel aus der Platzierung der Sensoren 102, 104, 106 im Fahrzeug 100 und ihren Messtoleranzen.

Fig. 2 zeigt ein Ablaufdiagramm eines Verfahrens zur Ansteuerung eines Insassenschutzmittels eines Fahrzeugs gemäß einem Ausführungsbeispiel der vorliegenden Erfindung. Das Verfahren kann beispielsweise von der in Fig. 1 gezeigten Vorrichtung 108 ausgeführt werden.

In einem Schritt 210 wird ein Sensorsignal über eine Schnittstelle empfangen. Dabei kann es sich um das Sensorsignal des in Fig. 1 gezeigten Sensors 102 handeln. In einem Schritt 212 werden weitere Referenzsensorsignale über eine oder mehrere weitere Schnittstellen empfangen. Dabei kann es sich um die Referenzsensorsignale der in Fig. 1 gezeigten Sensoren 104, 106 handeln.

In einem Schritt 214 kann das empfangene Sensorsignal basierend auf den Referenzsensorsignalen überprüft werden. Der Schritt 214 kann fortlaufend oder ansprechend auf ein Erkennen einer Kollision durchgeführt werden. Das Erkennen der Kollision kann basierend auf dem empfangenen Sensorsignal oder basierend auf weiteren Informationen erfolgen. Beispielsweise kann das Erkennen basierend auf einem Vergleich des Sensorsignals mit einer vorgegebenen Schwelle erfolgen. Im Schritt 214 kann das empfangene Sensorsignal innerhalb einer vorbestimmten Zeitspanne fortlaufend mit den Referenzsensorsignalen verglichen werden. Die vorbestimmte Zeitspanne kann zum Zeitpunkt des Erkennens der Kollision gestartet werden. Während der vorbestimmten Zeitspanne können die Schritte 210, 212 fortlaufend ausgeführt werden, so dass fortlaufend aktuelle Werte der Sensorsignals und der Referenzsensorsignale zur Verfügung stehen. Jeder Vergleich kann ein Vergleichsergebnis liefern.

Die Vergleichsergebnisse können fortlaufend ausgewertet werden oder können gespeichert werden und beispielsweise nach Ablauf der vorbestimmten Zeitspanne ausgewertet werden. Basierend auf einer Auswertung der Vergleichsergebnisse wird das empfangene Sensorsignal bewertet. Die Bewertung kann ergeben, dass das empfangene Sensorsignal plausibel ist und somit zur Ansteuerung des Insassenschutzmittels geeignet ist. Ebenso kann die Bewertung ergeben, dass das empfangene Sensorsignal nicht plausibel ist und somit nicht zur Ansteuerung des Insassenschutzmittels geeignet ist. Ergibt die Bewertung, dass das empfangene Sensorsignal plausibel ist und wird die Kollision so eingestuft, dass eine Auslösung des Insassenschutzmittels sinnvoll ist, so wird das Insassenschutzmittel in einem Schritt 216 angesteuert, also beispielsweise ausgelöst.

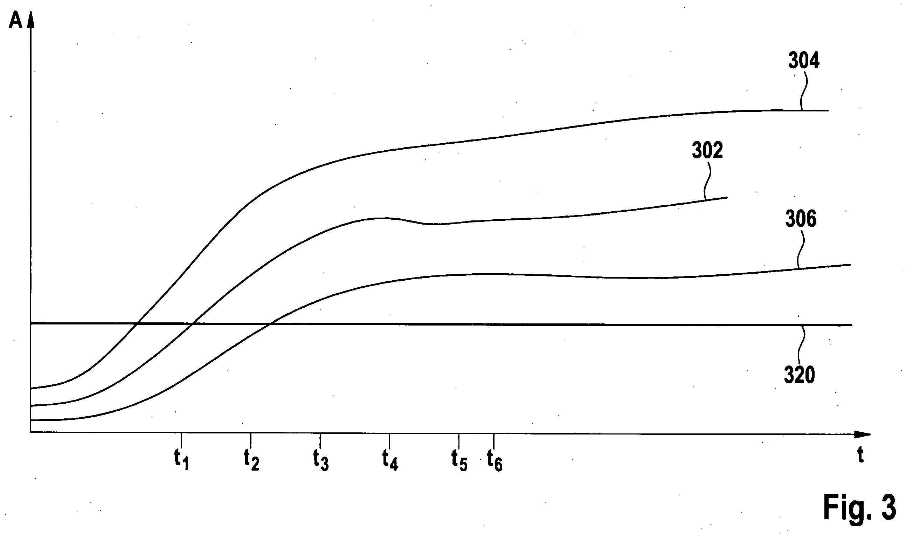

Fig. 3 zeigt einen Ablauf einer Bewertung eines Sensorsignals 302, gemäß einem Ausführungsbeispiel der vorliegenden Erfindung. Neben dem Sensorsignal 302 sind ein erstes Referenzsignal 304 und ein zweites Referenzsignal 306 gezeigt. Die Signale 302, 304, 306 sind in einem Diagramm aufgetragen, wobei auf der Abszisse die Zeit t und auf der Ordinate die Amplitude A der Signale 302, 304, 306 aufgetragen ist. Die Verläufe der Signale 302, 304, 306 sind beispielhaft und rein schematisch dargestellt. Die Signale 302, 304, 306 können beispielsweise von den in Fig. 1 gezeigten Sensoren 102, 104,106 erzeugt werden. Zu einem Zeitpunkt t1 überschreitet das Sensorsignal 302 eine Auslöseschwelle 320. Mit dem Überschreiten der Auslöseschwelle 320 wird ein Zeitfenster gestartet, das ausgehend von dem Zeitpunkt t1 bis zu dem Zeitpunkt t6 reicht. Während des Zeitfensters wird das Sensorsignal 302 zyklisch mit den Referenzsignalen 304, 306 verglichen.

Gemäß diesem Ausführungsbeispiel wird das Sensorsignal 302 zu dem Zeitpunkt t2 mit dem ersten Referenzsensorsignal 304, zu dem Zeitpunkt t3 mit dem zweiten Referenzsensorsignal 306, zu dem Zeitpunkt t4 erneut mit dem ersten Referenzsensorsignal 304 und zu dem Zeitpunkt t5 erneut mit dem zweiten Referenzsensorsignal 306 verglichen. Die Abstände zwischen den Zeitpunkten t1, t2, t3, t4, t5 können gleich lang sein. Aus den Vergleichen zu den Zeitpunkten t2, t3, t4, t5 ergibt sich jeweils ein Abstand zwischen einem Wert des Sensorsignals 302 und einem Wert des Referenzsignals 304, 306, mit dem das Sensorsignal 302 zu dem jeweiligen Zeitpunkt t2, t3, t4, t5 verglichen wird. Ist ein Abstand der sich aus einem Vergleich ergibt, kleiner als ein vorgegebener Mindestabstand, so wird das Sensorsignal 302 bezüglich des Zeitpunktes t2, t3, t4, t5 zu dem der Vergleich durchgeführt wird, als fehlerfrei angenommen. Ist der Abstand der sich aus dem Vergleich ergibt, größer als der vorgegebene Mindestabstand, so wird das Sensorsignal 302 bezüglich des Zeitpunktes t2, t3, t4, t5 zu dem der Vergleich durchgeführt wird, als fehlerhaft angenommen. Aus den sich aus den Vergleichen zu den Zeitpunkten t2, t3, t4, t5 ergebenden Abständen und den sich daraus ergebenden Vergleichsergebnissen wird bestimmt, ob das Sensorsignal 302 plausibel ist. Wird der Sensorsignal 302 als plausibel gewertet, so kann eine Ansteuerung eines Insassenschutzmittels basierend auf dem Sensorsignal 302, beispielsweise zu dem Zeitpunkt t6, also nach Ablauf des Zeitfensters, erfolgen.

Die beschriebenen und in den Figuren gezeigten Ausführungsbeispiele sind nur beispielhaft gewählt.

## Patentansprüche

1. Verfahren zur Überprüfung eines zur Ansteuerung eines Insassenschutzmittels (110) eines Fahrzeugs (100) geeigneten Sensorsignals (302), das die folgenden Schritte umfasst:
Durchführen eines Vergleichs zwischen dem Sensorsignal (302) und mindestens einem Referenzsignal (304, 306) mehrmals innerhalb eines vorbestimmten Zeitintervalls, um eine Mehrzahl von Vergleichsergebnissen zu erhalten, wobei das Sensorsignal (302) und das mindestens eine Referenzsignal (304, 306) von unterschiedlichen, im Fahrzeug angeordneten Sensoren bereitgestellt werden; und
Bewerten des Sensorsignals basierend auf der Mehrzahl von Vergleichsergebnissen, um einen Fehler des Sensorsignals zu erkennen.

2. Verfahren gemäß Anspruch 1, bei dem im Schritt des Durchführens der Vergleich zyklisch innerhalb des vorbestimmten Zeitintervalls durchgeführt wird.

3. Verfahren gemäß einem der vorangegangenen Ansprüche, bei dem der Vergleich fortlaufend wechselnd mit einem ersten Referenzsignal (304) und mindestens einem zweiten Referenzsignal (306) durchgeführt wird.

4. Verfahren gemäß einem der vorangegangenen Ansprüche, mit einem Schritt des Prüfens ob ein Wert des Sensorsignals (302) innerhalb eines vorbestimmten Wertebereichs liegt und bei dem der Schritt des Durchführens ausgeführt wird, wenn der Wert des Sensorsignals innerhalb des vorbestimmten Wertebereichs liegt.

5. Verfahren gemäß einem der vorangegangenen Ansprüche, bei dem das Sensorsignal (302) als fehlerhaft bewertet wird, wenn eine vorbestimmte Anzahl der Mehrzahl von Vergleichsergebnissen eine Mindestabweichung zwischen dem einem Sensorsignal und dem mindestens einem Referenzsignal anzeigen.

6. Verfahren gemäß Anspruch 5, bei dem das Sensorsignal (302) und das mindestens eine Referenzsignal (304, 306) Signale von Sensoren (102, 104, 106) repräsentieren, die an unterschiedlichen Positionen im Fahrzeug (100) angeordnet sind und bei dem die Mindestabweichung abhängig von den Positionen der Sensoren ist.

7. Verfahren gemäß Anspruch 5 oder 6, bei dem das Sensorsignal (302) und das mindestens eine Referenzsignal (304, 306) Signale von Sensoren (102, 104, 106) repräsentieren, die im Fahrzeug (100) angeordnet sind, und bei dem die Mindestabweichung abhängig von Messtoleranzen der Sensoren ist.

8. Verfahren zur Ansteuerung eines Insassenschutzmittels (110) eines Fahrzeugs (100), das die folgenden Schritte umfasst:
Empfangen (210) eines Sensorsignals (302) über eine Schnittstelle zu einem Sensor (102);
Empfangen (212) mindestens eines Referenzsignals (304, 306) über eine Schnittstelle zu mindestens einem Referenzsensor (104, 106);
Überprüfen (214) des Sensorsignals mittels eines Verfahrens gemäß einem der vorangegangenen Ansprüche; und
Ansteuern (216) des Insassenschutzmittefs basierend auf dem Sensorsignal, wenn beim Überprüfen des Sensorsignals kein Fehler erkannt wird.

9. Vorrichtung (108), die ausgebildet ist, um die Schritte eines Verfahrens gemäß einem der Ansprüche 1 bis 8 durchzuführen.

10. Computer-Programmprodukt mit Programmcode zur Durchführung des Verfahrens nach einem der Ansprüche 1 bis 8, wenn das Programm auf einer Vorrichtung ausgeführt wird.

## Claims

1. Method for checking a sensor signal (302) suitable for controlling an occupant protection means (110) of a vehicle (100), which method comprises the following steps of:
repeatedly performing a comparison of the sensor signal (302) and at least one reference signal (304, 306) within a predetermined interval of time in order to obtain a plurality of comparison results, the sensor signal (302) and the at least one reference signal (304, 306) being provided by different sensors arranged in the vehicle; and
assessing the sensor signal on the basis of the plurality of comparison results in order to detect an error in the sensor signal.

2. Method according to Claim 1, in which, in the performance step, the comparison is carried out cyclically within the predetermined interval of time.

3. Method according to one of the preceding claims, in which the comparison is continuously carried out alternately with a first reference signal (304) and at least one second reference signal (306).

4. Method according to one of the preceding claims, having a step of checking whether a value of the sensor signal (302) is within a predetermined range of values, and in which the performance step is carried out if the value of the sensor signal is within the predetermined range of values.

5. Method according to one of the preceding claims, in which the sensor signal (302) is assessed as erroneous if a predetermined number of the plurality of comparison results indicate a minimum deviation between the one sensor signal and the at least one reference signal.

6. Method according to Claim 5, in which the sensor signal (302) and the at least one reference signal (304, 306) represent signals from sensors (102, 104, 106) arranged at different positions in the vehicle (100), and in which the minimum deviation is dependent on the positions of the sensors.

7. Method according to Claim 5 or 6, in which the sensor signal (302) and the at least one reference signal (304, 306) represent signals from sensors (102, 104, 106) arranged in the vehicle (100), and in which the minimum deviation is dependent on measurement tolerances of the sensors.

8. Method for controlling an occupant protection means (110) of a vehicle (100), which method comprises the following steps of:
receiving (210) a sensor signal (302) via an interface to a sensor (102);
receiving (212) at least one reference signal (304, 306) via an interface to at least one reference sensor (104, 106);
checking (214) the sensor signal using a method according to one of the preceding claims; and
controlling (216) the occupant protection means on the basis of the sensor signal if an error is not detected when checking the sensor signal.

9. Apparatus (108) which is designed to carry out the steps of a method according to one of Claims 1 to 8.

10. Computer program product with program code for carrying out the method according to one of Claims 1 to 8 when the program is executed on an apparatus.

## Revendications

1. Procédé de contrôle d'un signal de capteur (302) approprié pour la commande d'un moyen de protection des passagers (110) d'un véhicule (100), comprenant les étapes consistant à :
exécuter plusieurs fois une comparaison entre le signal de capteur (302) et au moins un signal de référence (304, 306) au cours d'un intervalle de temps prédéterminé afin d'obtenir une pluralité de résultats de comparaison, dans lequel le signal de capteur (302) et l'au moins un signal de référence (304, 306) sont fournis par des capteurs différents disposés dans le véhicule ; et
évaluer le signal de capteur sur la base de la pluralité de résultats de comparaison afin de détecter un défaut du signal de capteur.

2. Procédé selon la revendication 1, dans lequel, lors de l'étape d'exécution, la comparaison est effectuée cycliquement au cours de l'intervalle de temps prédéterminé.

3. Procédé selon l'une quelconque des revendications précédentes, dans lequel la comparaison est effectuée en contenu de manière alternée avec un premier signal de référence (304) et au moins un second signal de référence (306).

4. Procédé selon l'une quelconque des revendications précédentes, comprenant une étape consistant à contrôler si une valeur du signal de capteur (302) se situe à l'intérieur d'une gamme de valeurs prédéterminée et dans lequel l'étape d'exécution est effectuée lorsque la valeur du signal de capteur se situe à l'intérieur de la gamme de valeurs prédéterminée.

5. Procédé selon l'une quelconque des revendications précédentes, dans lequel le signal de capteur (302) est évalué comme étant défectueux lorsqu'un nombre prédéterminé de la pluralité de résultats de comparaison indique un écart minimum entre ledit signal de capteur et l'au moins un signal de référence.

6. Procédé selon la revendication 5, dans lequel le signal de capteur (302) et l'au moins un signal de référence (304, 306) représentent des signaux de capteurs (102, 104, 106) qui sont disposés à des positions différentes dans le véhicule (100) et dans lequel l'écart minimum est fonction des positions des capteurs.

7. Procédé selon la revendication 5 ou 6, dans lequel le signal de capteur (302) et l'au moins un signal de référence (304, 306) représentent des signaux de capteurs (102, 104, 106) qui sont disposés dans le véhicule (100) et dans lequel l'écart minimum est fonction de tolérances de mesure des capteurs.

8. Procédé de commande d'un moyen de protection des passagers (110) d'un véhicule (100) comprenant les étapes consistant à :
recevoir (210) un signal de capteur (302) par l'intermédiaire d'une interface avec un capteur (102) ;
recevoir (212) au moins un signal de référence (304, 306) par l'intermédiaire d'une interface avec au moins un capteur de référence (104, 106) ;
contrôler (214) le signal de capteur au moyen d'un procédé selon l'une quelconque des revendications précédentes ; et
commander (216) le moyen de protection des passagers sur la base du signal de capteur lorsqu'aucun défaut n'est détecté lors du contrôle du signal de capteur.

9. Dispositif (108) qui est conçu pour mettre en oeuvre les étapes d'un procédé selon l'une quelconque des revendications 1 à 8.

10. Produit de programme informatique comportant un code de programme destiné à mettre en oeuvre le procédé selon l'une quelconque des revendications 1 à 8 lorsque le programme est exécuté sur un dispositif.
